# EUROPÄISCHE PATENTANMELDUNG

(11) **EP 2 060 877 A2**
(43) Veröffentlichungstag der Anmeldung: **20.05.2009**
(21) Anmeldenummer: 08018373.4
(22) Anmeldetag: 21.10.2008
(51) Int. Cl.: G01D 11/24

(54) **Transmitter und verfahren zur herstellung eines transmitters**

(30) Priorität: 14.11.2007 DE 102007054717
(71) Anmelder: INOR Process AB, 20039 Malmö (SE)
(72) Erfinder: Martensson, Hans-Owe, 21376 Malmö (SE)
(74) Vertreter: Gesthuysen, Michael

(57) **Zusammenfassung**

Beschrieben und dargestellt ist ein Transmitter, insbesondere zur Kopfmontage in Prozeßthermometern, mit einem Oberteil (2), einem Unterteil (3) wenigstens einer Schaltungseinheit (4) und wenigstens einem elektrischen Kontaktelement (5), wobei die Schaltungseinheit (4) auf der Innenseite des Oberteils (2) angeordnet ist und über das Kontaktelement (5) von der Außenseite des Oberteils (2) elektrisch kontaktierbar ist.

Der Erfindung liegt die Aufgabe zugrunde, einen Transmitter und ein Verfahren zur Herstellung eines Transmitters anzugeben, bei denen die aus dem Stand der Technik bekannten Nachteile - zumindest teilweise - vermieden werden.

Diese Aufgabe wird bei dem in Rede stehenden Transmitter dadurch gelöst, daß das Unterteil (3) einstückig durch thermoplastischen Kunststoff gebildet ist, und das Unterteil (3) und das Oberteil (2) kraftschlüssig und/oder formschlüssig miteinander verbunden sind.

## Beschreibung

Die Erfindung betrifft einen Transmitter, insbesondere zur Kopfmontage in Prozeßthermometern, mit einem Oberteil, einem Unterteil, wenigstens einer Schaltungseinheit und wenigstens einem elektrischen Kontaktelement, wobei die Schaltungseinheit auf der Innenseite des Oberteils angeordnet ist und über das Kontaktelement von der Außenseite des Oberteils elektrisch kontaktierbar ist. Die Erfindung betrifft ferner ein Verfahren zur Herstellung eines solchen Transmitters, wobei die elektrische Schaltungseinheit auf der Innenseite des Oberteils angeordnet wird und das Kontaktelement so an oder in dem Oberteil angeordnet wird, daß die Schaltungseinheit über das Kontaktelement elektrisch kontaktiert wird.

Transmitter der vorgenannten Art sind seit längerem bekannt, insbesondere aus dem Bereich der Prozeßmeßtechnik, hier vor allem aus der Temperaturmessung, wobei das Einsatzgebiet von Transmittern nicht auf die Temperaturmessung beschränkt ist. Ganz allgemein haben Transmitter die Aufgabe, ein Sensorsignal unabhängig davon, ob es sich um das Sensorsignal eines Thermoelements, eines kapazitiven oder induktiven Sensors oder beispielsweise um das "Signal" eines Dehnungsmeßstreifens (Widerstandswert) handelt, in ein standardisiertes Signal umzusetzen und der übergeordneten Prozeßüberwachung zur Verfügung zu stellen. Im folgenden wird der Einsatz und die Verwendung eines Transmitters am Beispiel eines Prozeßthermometers beschrieben, wobei festzustellen ist, daß ein Transmitter selbstverständlich nicht auf diesen Anwendungsfall beschränkt ist.

Der hier in Rede stehende Transmitter ist üblicherweise in einem Anschlußkopf angeordnet, der den Transmitter vor Umgebungseinflüssen schützt und eine sichere Montagemöglichkeit für den Transmitter darstellt. In dem Anschlußkopf wird der Transmitter durch eine Verdrahtung mit dem eigentlichen Sensorelement verbunden. Im Falle der Temperaturmessung ist das thermische Sensorelement (temperaturabhängiger Widerstand oder Thermoelement) in einem Schutzrohr angeordnet, das mit dem eigentlichen Prozeß in Berührung kommt, und das Sensorelement ist ferner über einen Prozeßanschluß und ein Halsrohr mit dem Anschlußkopf verbunden. Das die eigentlich interessierende physikalische Größe in eine auswertbare Größe wandelnde Sensorelement ist meist mit mehreren Drähten über ein oder mehrere Kontaktelemente mit dem Transmitter elektrisch leitend verbunden, wobei die Kontaktelemente ihrerseits mit der Schaltungseinheit des Transmitters in elektrischer Verbindung stehen.

Gattungsgemäße Transmitter bestehen aus einem Oberteil und einem Unterteil, wobei das Oberteil und das Unterteil im montierten Zustand des Transmitters einen Hohlraum bilden, in dem sich die Schaltungseinheit befindet. Der Hohlraum wird dann üblicherweise mit Silikon oder einer silikonhaltigen Masse ausgefüllt, die auch die Schaltungseinheit umgibt und schützt. Nachteilig bei dieser Anordnung ist, daß der Transmitter aus verhältnismäßig vielen Teilen besteht und die Herstellung eines solchen Transmitters - bedingt durch seinen Aufbau und durch die verwendeten Materialien - sehr lange dauert. Das liegt maßgeblich daran, daß das verwendete Silikon oftmals zweikomponentig ist, und nach dem Mischvorgang die verarbeitungsfähige Silikonmasse zunächst einer Vakuumbehandlung unterzogen werden muß, um eingeschlossenen Luftblasen zu entfernen. Ferner muß das verwendete Silikon über einen sehr aufwendigen Wärmebehandlungsprozeß ausgehärtet werden.

Der Erfindung liegt daher die Aufgabe zugrunde, einen Transmitter und ein Verfahren zur Herstellung eines Transmitters anzugeben, bei denen die oben genannten Nachteile - zumindest teilweise - vermieden werden.

Der erfindungsgemäße Transmitter, bei dem die zuvor hergeleitete und aufgezeigte Aufgabe gelöst ist, ist zunächst und im wesentlichen dadurch gekennzeichnet, daß das Unterteil einstückig durch thermoplastischen Kunststoff gebildet ist, und das Unterteil und das Oberteil kraftschlüssig und/oder formschlüssig miteinander verbunden sind. Durch die erfindungsgemäße Ausgestaltung des Transmitters kann auf ein separates, schalenförmiges Unterteil verzichtet werden, da das aus thermoplastischem Kunststoff gebildete Unterteil die Funktion der aus dem Stand der Technik bekannten Vergußmasse und des schalenförmigen Unterteils zusammen erfüllt.

Bei besonders vorteilhaften Ausgestaltungen der Erfindung umgibt das Unterteil die im Oberteil angeordnete Schaltungseinheit im wesentlichen, was in verschiedener Hinsicht vorteilhaft ist. Zum einen wird dadurch erreicht, daß die Schaltungseinheit vor äußeren Einflüssen mechanisch und elektrisch geschützt ist, wobei insbesondere mögliche Relativbewegungen durch Vibrationen zwischen dem Oberteil und der Schaltungseinheit reduziert werden, was sich vorteilhaft auf die zu erwartende Standzeit auswirkt. Andererseits ist die Schaltungseinheit durch das sie umgebende Unterteil auch vor Feuchtigkeit und ungleichmäßiger thermischer Belastung geschützt. Ein weiterer Vorteil der vollständigen Umschließung der Schaltungseinheit durch den thermoplastischen Kunststoff des Unterteils liegt darin, daß die am Oberteil fixierte Schaltungseinheit durch praktisch unauflösbaren Formschluß mit der Schaltungseinheit auch gleichzeitig mit dem Oberteil verbunden ist. Wenn davon die Rede ist, daß die Schaltungseinheit "im wesentlichen" von dem Unterteil umgeben ist, dann ist damit gemeint, daß es zur Erzielung der oben genannten Effekte oftmals nicht darauf ankommt, daß eine im engen Wortsinne tatsächlich vollständige Umschließung der Schaltungseinheit vorliegt.

Bei einer weiteren vorteilhaften Ausgestaltung der Erfindung ist der thermoplastische Kunststoff ein Stoff aus der Gruppe der Polyamide bzw. umfaßt einen Stoff aus der Gruppe der Polyamide. Diese Stoffgruppe eignet sich besonders für die hier in Rede stehende Anwendung, da die elektrische Leitfähigkeit extrem gering ist, nämlich im Bereich von 10⁻¹² m⁻¹ Ω⁻¹ liegt, bei einer guten mechanischen Elastizität. Es werden insbesondere solche Polyamide bevorzugt, die eine Glasübergangstemperatur im Bereich von 60° bis 75°C haben, vorzugsweise eine Glasübergangstemperatur im Bereich von über 70°C haben.

Besonders robust ausgestaltet ist der erfindungsgemäße Transmitter insbesondere dann, wenn das Unterteil an der Innenseite des Oberteils im wesentlichen vollständig anliegt, so daß sich Oberteil und Unterteil des Transmitters vollständig aneinander abstützen können, was sich insbesondere auch auf die langfristige Funktionsfähigkeit der elektrischen Verbindung zwischen den Kontaktelementen und der Schaltungseinheit positiv auswirkt.

Nach einer weiteren vorteilhaften Ausgestaltung der Erfindung sind im Oberteil Vorsprünge ausgebildet, und im Unterteil sind korrespondierende Vorsprünge ausgebildet, wobei sich die Vorsprünge des Oberteils und die Vorsprünge des Unterteils im montierten Zustand des Transmitters gegeneinander abstützen könne, so daß das Oberteil und das Unterteil miteinander verriegelt sind.

Die zuvor hergeleitete und aufgezeigte Aufgabe ist nach einer weiteren Lehre der Erfindung bei dem eingangs genannten Verfahren zur Herstellung eines Transmitters dadurch gelöst, daß das Oberteil mit der Schaltungseinheit in einer Form angeordnet wird, ein thermoplastischer Kunststoff durch Erhitzen auf Arbeitstemperatur gebracht wird und das Unterteil durch Gießen oder Spritzen des thermoplastischen Kunststoffes in der Form und an der Innenseite des Oberteils einstückig ausgebildet wird, so daß das Unterteil und das Oberteil kraftschlüssig und/oder formschlüssig miteinander verbunden werden.

Gegenüber dem bekannten Verfahren hat das erfindungsgemäße Verfahren u. a. den erheblichen Vorteil, daß auf die Verarbeitung eines separaten, schalenförmigen Unterteils verzichtet werden kann.

Besonders vorteilhaft ist das Verfahren dann, wenn als thermoplastischer Kunststoff ein Stoff aus der Gruppe der Polyamide bzw. ein Stoff, der Polyamide umfaßt, ausgewählt wird. Gegenüber der bekannten Verwendung von insbesondere zweikomponentigen Silikonen entfällt hier sowohl ein Verfahrensschritt zur Ausgasung der Masse unter Vakuum als auch ein Aushärtungsschritt in einer Wärmekammer. Der Zeitaufwand zur Durchführung des erfindungsgemäßen Verfahrens beträgt nur einen Bruchteil dessen bei der Verwendung von Silikonen. In einer vorteilhaften Ausgestaltung des Verfahrens wird der Gieß- oder Spritzvorgang in weniger als 30 Sekunden durchgeführt, vorzugsweise sogar in weniger als 20 Sekunden. Der so hergestellte Transmitter kann schon nach einer sehr kurzen Phase des Abkühlens aus der Form entnommen und sogar kalibriert werden. Der Zeitgewinn gegenüber dem konventionellen Verfahren ist beträchtlich, so daß die mit dem erfindungsgemäßen Verfahren hergestellten Transmitter wesentlich wirtschaftlicher produziert werden können.

Im einzelnen gibt es nun verschiedene Möglichkeiten, den erfindungsgemäßen Transmitter und das erfindungsgemäße Verfahren auszugestalten und weiterzubilden. Dazu wird verwiesen auf die den Patentansprüchen 1 und 8 nachgeordneten Patentansprüche und auf die Beschreibung bevorzugter Ausführungsbeispiele in Verbindung mit der Zeichnung. In der Zeichnung zeigen
- Fig. 1: eine perspektivische Ansicht eines erfindungsgemäßen Transmitters von schräg oben,
- Fig. 2: eine perspektivische Ansicht eines erfindungsgemäßen Transmitters von schräg unten,
- Fig. 3: eine schematische Schnittansicht durch einen erfindungsgemäßen Transmitter ohne Schaltungseinheit,
- Fig. 4: eine schematische Schnittansicht durch einen erfindungsgemäßen Transmitter mit Schaltungseinheit,
- Fig. 5: eine schematische Schnittansicht durch einen erfindungsgemäßen Transmitter mit Oberteil und Unterteil,
- Fig. 6: eine schematische Schnittansicht eines weiteren Ausführungsbeispiels eines Transmitters ohne Schaltungseinheit und
- Fig. 7: eine schematische Schnittansicht eines erfindungsgemäßen Transmitters basierend auf dem Ausführungsbeispiel gemäß Fig. 6.

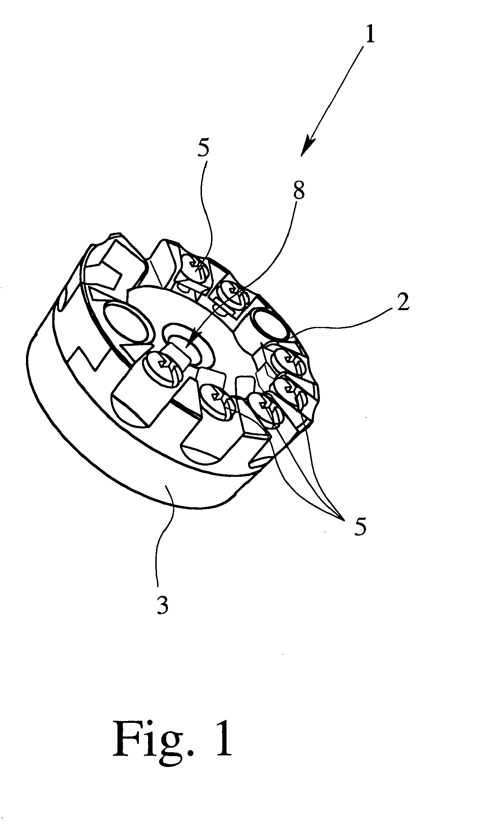

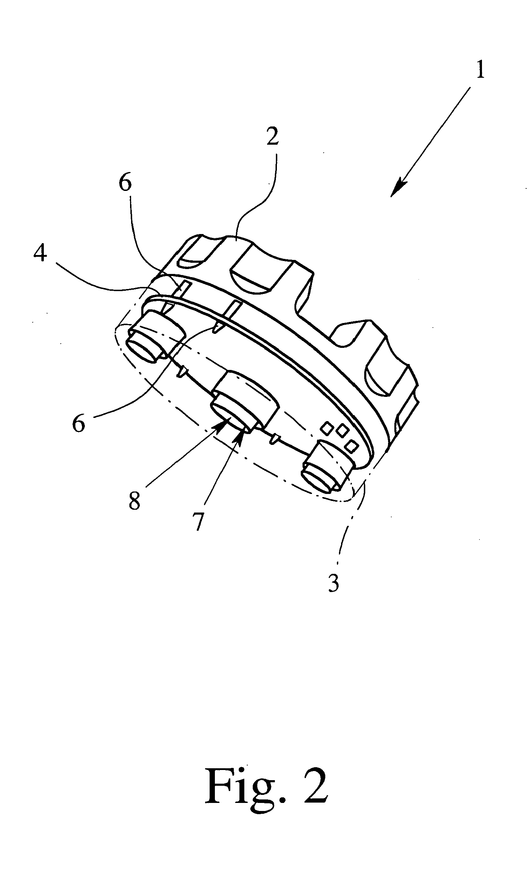

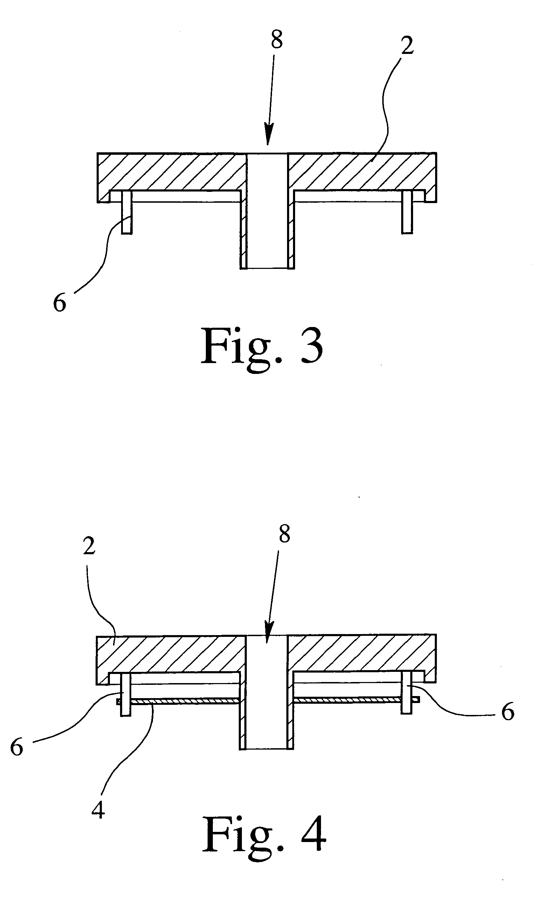

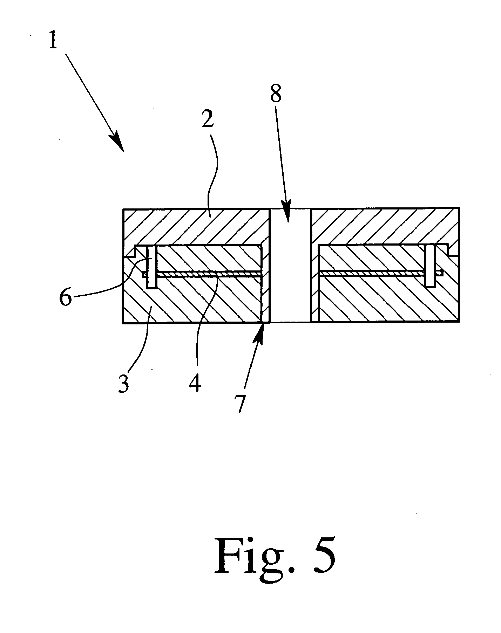

In den Fig. 1, 2, 5 und 7 sind jeweils fertigmontierte bzw. hergestellte Transmitter 1 dargestellt, wobei speziell für die Fig. 3 bis 7 gilt, daß es sich um extrem vereinfachte und schematische Darstellungen handelt. Bei allen in den Fig. 1 bis 7 dargestellten Transmittern 1 handelt es sich um Transmitter 1 für Prozeßthermometer, die zur Kopfmontage vorgesehen sind und von ihren Abmessungen in Anschlußköpfe mit den Abmessungen der DIN-Form B passen. Die Transmitter 1 weisen ein Oberteil 2, ein Unterteil 3, wenigstens eine Schaltungseinheit 4 und elektrische Kontaktelemente 5 auf. Die Schaltungseinheit 4 ist, wie in den Fig. 2, 4, 5 und 7 zu erkennen ist, auf der Innenseite des Oberteils 2 angeordnet und über die Kontaktelemente 5 von der Außenseite des Oberteils 2 elektrisch kontaktierbar. Die von der Außenseite des Oberteils 2 betätigbaren Kontaktelemente reichen mit Kontaktstiften 6 durch das Oberteil 2 bis auf die Innenseite des Oberteils 2, wo sie die Schaltungseinheit 4 elektrisch kontaktieren. Die in den Fig. 2 bis 7 dargestellten Kontaktstifte 6 sind dabei durch Verlötung mit einer nicht dargestellten Leiterbahn der Schältungseinheit verbunden. Von der Schaltungseinheit 4 ist jeweils nur dargestellt eine Leiterplatte; Leiterbahnen und etwaige schaltungstechnische Bauelemente sind nicht dargestellt.

Die in den Fig. 1, 2, 5 und 7 dargestellten Transmitter 1 zeichnen sich dadurch aus, daß ihr jeweiliges Unterteil 3 einstückig durch thermoplastischen Kunststoff gebildet ist, und das Unterteil 3 und das Oberteil 2 kraftschlüssig und/oder formschlüssig miteinander verbunden sind. Der Formschluß wird dadurch erreicht, daß sich der beim Herstellungsvorgang ver(zäh)flüssigte thermoplastische Kunststoff um Elemente des Oberteils 2 legt, die auf der Innenseite des Oberteils 2 ausgebildet sind. Wenn von der Innenseite des Oberteils 2 die Rede ist, dann ist damit die Seite gemeint, die sich im zusammengefügten Zustand des Transmitters 1 innerhalb des Transmitters 1 befindet.

In den Ausführungsbeispielen gemäß den Fig. 1, 2, 5 und 7 umgibt das Unterteil 2 die im Oberteil 3 angeordnete Schaltungseinheit 4. Dadurch ist einerseits die Schaltungseinheit 4 gegen äußere Einflüsse geschützt, andererseits wird dadurch der Zusammenhalt von Oberteil 2 und Unterteil 3 erhöht, da das Unterteil 3 die aufgrund der Lötung fest mit dem Oberteil 2 verbundene Schaltungseinheit 4 hintergreift und so einen zusätzlichen Formschluß mit der Schaltungseinheit 4 herstellt.

In allen dargestellten Ausführungsbeispielen wird als thermoplastischer Kunststoff ein Stoff aus der Gruppe der Polyamide eingesetzt. Stoffe dieser Stoffklasse verhalten sich grundsätzlich in ähnlicher Weise wie Heißklebstoffe, die nach Abkühlen auf Raumtemperatur stark verfestigt sind, dennoch gute elastische Eigenschaften aufweisen bei nur sehr geringen elektrischen Leitwerten, was von besonderem Vorteil ist, da der thermoplastische Kunststoff in Form des Unterteils 3 auch die elektrische wirksame Schaltungseinheit 4 umschließt.

Bei den in den Figuren 1, 2, 5 und 7 dargestellten Ausführungsbeispielen liegt das Unterteil 3 an der Innenseite des Oberteils 2 im wesentlichen vollständig an, so daß sich das Oberteil 2 und das Unterteil 3 praktisch vollflächig aneinander abstützen können, was der mechanischen Stabilität der Anordnung insgesamt zu Gute kommt.

Alle dargestellten Transmitter weisen ein Unterteil 3 auf, das mit einer Unterkante 7 des Oberteils 2 abschließt. Derartige Anordnungen sind in der Herstellung besonders vorteilhaft, da sie besonders einfach positionierbar sind.

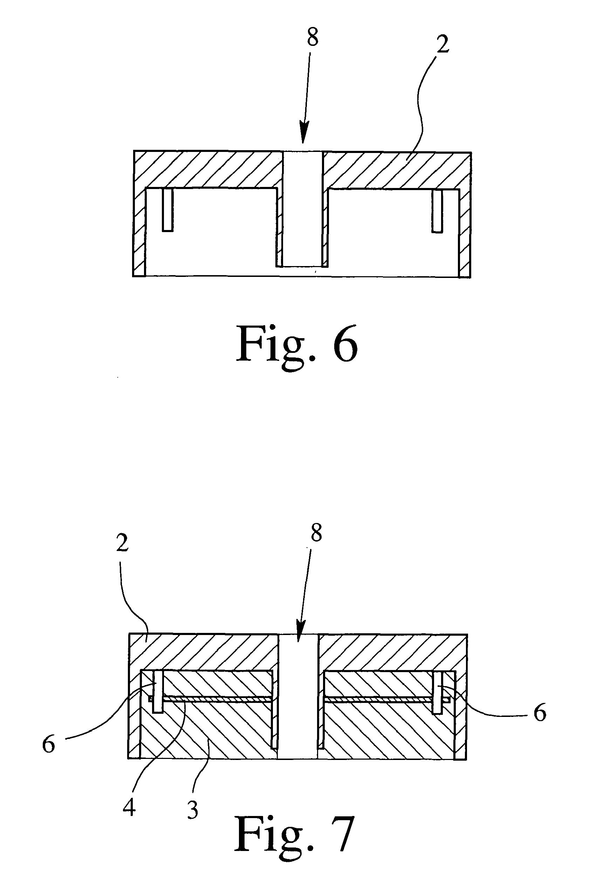

Ferner ist ebenfalls in allen in den Fig. 1 bis 7 dargestellten Ausfiihrungsbeispielen zu erkennen, daß eine Durchführung 8 durch das Unterteil 3 und durch das Oberteil 2 vorgesehen ist. In den Ausfiihrungsbeispielen gemäß den Fig. 1, 2 und 5 ist die Durchführung 8 ausschließlich im Oberteil 2 ausgebildet, wobei die Durchführung 8 in dem Ausfiihrungsbeispiel gemäß Fig. 7 zum Teil auch in dem Unterteil 3 ausgebildet ist. Unabhängig davon, wie die Durchführung 8 exakt ausgestaltet ist, wird sie im wesentlichen als Kabeldurchfiihrung für die Anschlüsse des Sensorelements verwendet, um die Kabel von der Außenseite des Unterteils 3 auf die Außenseite des Oberteils 2 zu leiten und dort mit den Kontaktelementen 5 zu verbinden. Die Durchführungen 8 sind sämtlich zentrisch in den Transmittern 1 angeordnet.

In den Fig. 3 bis 5 ist der Herstellungsprozeß der Transmitter 1 schematisch angedeutet. In Fig. 3 ist zunächst nur das Oberteil 2 mit Kontaktstiften 6 zu sehen, wobei in dem Oberteil 2 eine Durchführung 8 ausgebildet ist. Die Kontaktelemente sind in dieser Darstellung nicht sichtbar. Für das hier erläuterte Verfahren ist von untergeordneter Bedeutung, wie das Oberteil 2 selbst hergestellt worden ist, es kann sich beispielsweise um ein Kunststoff- oder auch Keramikformteil handeln; in dem dargestellten Ausführungsbeispiel besteht das Oberteil 2 des Transmitters aus Kunststoff.

In einem an den in Fig. 3 dargestellten Verfahrensschritt anschließenden Verfahrensschritt wird die elektrische Schaltungseinheit 4 auf der Innenseite des Oberteils 2 so angeordnet, daß die Schaltungseinheit 4 über das Kontaktelement elektrisch kontaktiert wird, was in Fig. 4 dargestellt ist. Die elektrische Kontaktierung der Schaltungseinheit 4 geschieht in dem dargestellten Fall über Kontaktstifte 6, die mit den nicht dargestellten Kontaktelementen in elektrischer Verbindung stehen.

In einem nachfolgenden Verfahrensschritt wird das Oberteil 2 mit der Schaltungseinheit 4 in einer Form angeordnet, und ein thermoplastischer Kunststoff wird durch Erhitzen auf Arbeitstemperatur gebracht, also soweit erhitzt, daß er gieß- bzw. spritzfähig ist. Im vorliegenden Fall handelt es sich bei dem thermoplastischen Kunststoff um ein Polyamid. Durch Gießen oder Spritzen des thermoplastischen Kunststoffes wird das Unterteil 3 in der nicht dargestellten Form und an der Innenseite des Oberteils 3 einstückig ausgebildet, so daß das Unterteil 3 und das Oberteil 2 kraftschlüssig bzw. formschlüssig miteinander verbunden werden. Ein Kraftschluß wird beispielsweise dadurch erreicht, daß der thermoplastische Kunststoff sich beim Gieß- oder Spritzvorgang um Elemente des Oberteils 2 legt, die sich auf der Innenseite des Oberteils 2 befinden. Beim Erkalten des thermoplastischen Kunststoffes zieht sich dieser zusammen und umgreift diese Elemente fest. Der Spritz- bzw. Gießvorgang ist in den dargestellten Ausfiihrungsbeispielen so ausgestaltet, daß der thermoplastische Kunststoff - und damit das Unterteil 3 - die Schaltungseinheit 4 vollständig umfließt, wodurch ein zusätzlicher Formschluß zwischen dem Oberteil 2 und dem Unterteil 3 über die fest mit dem Oberteil 2 verbundene Schaltungseinheit 4 erzielt wird.

Der Spritz- oder Gießvorgang läßt sich sehr schnell durchführen und in den dargestellten Fällen ist er in etwa 20 Sekunden abgeschlossen. Nach dem Abkühlen des thermoplastischen Kunststoffes können die so hergestellten Transmitter kalibriert werden; die aus dem Stand der Technik bekannten Unterdruck- und Wärmebehandlungen entfallen.

In den Fig. 6 und 7 ist gezeigt, daß das Unterteil 3 von außen nicht erkennbar über das Oberteil 2 hinausragen muß, vielmehr mit den am weitesten hervorragenden Außenkanten 7 abschließt. In diesem Fall ist das Unterteil 3 praktisch ein Innenteil, das vom Oberteil 2 an seiner Oberseite und seitlich umfaßt wird.

## Patentansprüche

1. Transmitter, insbesondere zur Kopfmontage in Prozeßthermometern, mit einem Oberteil (2), einem Unterteil (3), wenigstens einer Schaltungseinheit (4) und wenigstens einem elektrischen Kontaktelement (5), wobei die Schaltungseinheit (4) auf der Innenseite des Oberteils (2) angeordnet ist und über das Kontaktelement (5) von der Außenseite des Oberteils (2) elektrisch kontaktierbar ist,
**dadurch gekennzeichnet,**
**daß** das Unterteil (3) einstückig durch thermoplastischen Kunststoff gebildet ist, und das Unterteil (3) und das Oberteil (2) kraftschlüssig und/oder formschlüssig miteinander verbunden sind.

2. Transmitter nach Anspruch 1, **dadurch gekennzeichnet, daß** das Unterteil (2) die im Oberteil (3) angeordnete Schaltungseinheit (4) im wesentlichen umgibt.

3. Transmitter nach Anspruch 1 oder 2, **dadurch gekennzeichnet, daß** der thermoplastische Kunststoff ein Stoff aus der Gruppe der Polyamide ist bzw. einen Stoff aus der Gruppe der Polyamide umfaßt.

4. Transmitter nach einem der Ansprüche 1 bis 3, **dadurch gekennzeichnet, daß** das Unterteil (3) an der Innenseite des Oberteils (2) im wesentlichen vollständig anliegt.

5. Transmitter nach einem der Ansprüche 1 bis 4, **dadurch gekennzeichnet, daß** das Unterteil (3) im wesentlichen mit einer Unterkante (7) des Oberteils (2) abschließt.

6. Transmitter nach einem der Ansprüche 1 bis 5, **dadurch gekennzeichnet, daß** eine Durchführung (8) durch das Unterteil (3) und durch das Oberteil (2) vorgesehen ist, wobei die Durchführung (8) insbesondere im Oberteil (2) ausgebildet ist, wobei die Durchführung (8) insbesondere zentrisch im Transmitter vorgesehen ist.

7. Transmitter nach einem der Ansprüche 1 bis 6, **dadurch gekennzeichnet, daß** im Oberteil (2) Vorsprünge ausgebildet sind und im Unterteil (3) korrespondierende Vorsprünge ausgebildet sind, wobei sich die Vorsprünge des Oberteils (2) und die Vorsprünge des Unterteils (3) im montierten Zustand des Transmitters gegeneinander abstützen, so daß das Oberteil (2) und das Unterteil (3) miteinander verriegelt sind.

8. Verfahren zur Herstellung eines Transmitters nach einem der Ansprüche 1 bis 7, wobei der Transmitter ein Oberteil (2), ein Unterteil (3), wenigstens eine Schaltungseinheit (4) und wenigstens ein elektrisches Kontaktelement (5) umfaßt, wobei die elektrische Schaltungseinheit (4) auf der Innenseite des Oberteils (2) angeordnet wird und das Kontaktelement (5) so an oder in dem Oberteil (2) angeordnet wird, daß die Schaltungseinheit (4) über das Kontaktelement (5) elektrisch kontaktiert wird,
**dadurch gekennzeichnet,**
**daß** das Oberteil (2) mit der Schaltungseinheit (4) in einer Form angeordnet wird, ein thermoplastischer Kunststoff durch Erhitzen auf Arbeitstemperatur gebracht wird und das Unterteil (3) durch Gießen oder Spritzen des thermoplastischen Kunststoffes in der Form und an der Innenseite des Oberteils (3) einstückig ausgebildet wird, so daß das Unterteil (3) und das Oberteil (2) kraftschlüssig und/oder formschlüssig miteinander verbunden werden.

9. Verfahren nach Anspruch 8, **dadurch gekennzeichnet, daß** als thermoplastischer Kunststoff ein Stoff aus der Gruppe der Polyamide bzw. ein Stoff, der Polyamide umfaßt, ausgewählt wird.

10. Verfahren nach Anspruch 8 oder 9, **dadurch gekennzeichnet, daß** der Gieß- oder Spritzvorgang in weniger als 30 Sekunden durchgeführt wird, vorzugsweise in weniger als 20 Sekunden durchgeführt wird.
